# EUROPEAN PATENT APPLICATION

(11) **EP 4 782 943 A1**
(43) Date of publication of application: **29.07.2026**
(21) Application number: 26151257.8
(22) Date of filing: 12.01.2026
(51) Int. Cl.: G05B 19/042

(54) **GENERATING A SAFETY SCORE FOR A FACILITY**

(30) Priority: 24.01.2025 US 202519036355
(71) Applicant: Honeywell International Inc., Charlotte, NC 28202 (US)
(72) Inventor: DUGE, Sudeep Jayakumar, Charlotte, 28202 (US); TRIPATHI, Sameer, Charlotte, 28202 (US); SUBBAIAH, Ramesh Molakalolu, Charlotte, 28202 (US)
(74) Representative: Haseltine Lake Kempner LLP

(57) **Abstract**

Devices, systems, and methods for generating a safety score for a facility are described herein. In some examples, one or more embodiments include a memory and a processor to execute instructions stored in the memory to receive building equipment inputs from a number of devices of an event system in a facility, determine a status of the number of devices based on the received building equipment inputs, and generate a safety score based on the determined status of the number of devices.

## Description

### Technical Field

The present disclosure relates to devices, systems, and methods for generating a safety score for a facility.

### Background

Facilities, such as commercial facilities, office buildings, hospitals, campuses (e.g., including buildings and outdoor spaces), and the like, may have an event system that can be used to monitor a facility, transmit information about a facility to a database, can be triggered during an event, such as an emergency situation (e.g., a fire) to warn occupants to evacuate, etc. Such an event system may include, in some examples, an alarm system having a control panel and a number of devices (e.g., sensors, sounders, pull stations, etc.) located throughout the facility (e.g., on different floors and/or in different rooms of the facility) that can perform an action when an event (e.g., a hazard event, a fault event, etc.) is occurring in the facility. In an example of an event, the number of devices may provide a notification of the event to the occupants of the facility via alarms and/or other mechanisms.

### Brief Description of the Drawings

Figure 1 is an example of a system for generating a safety score for a facility, in accordance with one or more embodiments of the disclosure.
Figure 2 illustrates an example of a facility having devices and a control panel, in accordance with one or more embodiments of the disclosure.
Figure 3 illustrates an example of generating a safety score, in accordance with one or more embodiments of the disclosure.
Figure 4 is an example of a computing device for generating a safety score for a facility, in accordance with one or more embodiments of the disclosure.

### Detailed Description

Devices, systems, and methods for generating a safety score for a facility are described herein. In some examples, one or more embodiments include a memory and a processor to execute instructions stored in the memory to receive building equipment inputs from a number of devices of an event system in a facility, determine a status of the number of devices based on the received building equipment inputs, and generate a safety score based on the determined status of the number of devices.

A facility can utilize an event system in order to monitor facility devices, warn occupants of the facility of an emergency event, etc. An event system can be a system of devices that operate to collect information about a facility and provide the collected information for analysis. Such an event system can also take actions based on the collected information, such as providing an audible and/or visible warning in an emergency event. For example, the event system can utilize devices collect information, analyze the collected information, and/or take actions in response to such collected information. As used herein, the term "device" refers to a device that can receive an input relating to an event and/or generate an output relating to an event. Such devices can be a part of the event system of a space in a facility/in the facility at large and can include devices such as fire devices including fire sensors, smoke detectors, heat detectors, carbon monoxide (CO) detectors, or combinations of these; fire control panels; air quality sensors; interfaces; manual call points (MCPs); pull stations; input/output modules; aspirating units; fire doors; and/or audio/visual devices (e.g., speakers, sounders, flashers, buzzers, microphones, cameras, video displays, video screens, etc.), relay output modules, among other types of devices. Such devices may also include self-test capabilities.

As mentioned above, there are many different devices that make up an event system in a facility. These devices can be interconnected and work together to ensure the facility is safe for occupants.

While these devices are intended to ensure the facility is safe for occupants, in some examples, devices in the event system may not function properly. For example, a device in the event system may malfunction. Such a malfunction may be the result of a fault in the device, improper maintenance of the device, improper placement of the device in the facility, manufacturing defects, out of warranty devices, among other examples of a device malfunction. If any such malfunction occurs, the facility may not be as safe as expected.

Accordingly, there may be instances of the facility having an expected safety level, but the facility is not actually as safe as a user expects the facility to be. However, currently there is no way to quantify a safety level of the facility for a user.

Generating a safety score for a facility can allow for a safety score to be generated to quantify a safety level for the facility. The safety score can provide a quantized level of safety for the facility based on information received from devices in the facility. Utilizing this information, a computing device can determine a safety score for the facility, allowing a user such as a building engineer/manager to determine the level of safety in the facility via a quantified number. Additionally, the user can see where the safety score is negatively affected, view suggestions on how to improve the safety score of the facility, and in some instances, cause faults in the facility that are negatively impacting the safety score to be automatically remedied. Generating a safety score for a facility can provide a robust approach to quantifying a safety level of the facility, as well as improving the safety of the facility more easily and efficiently, as compared with previous approaches.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

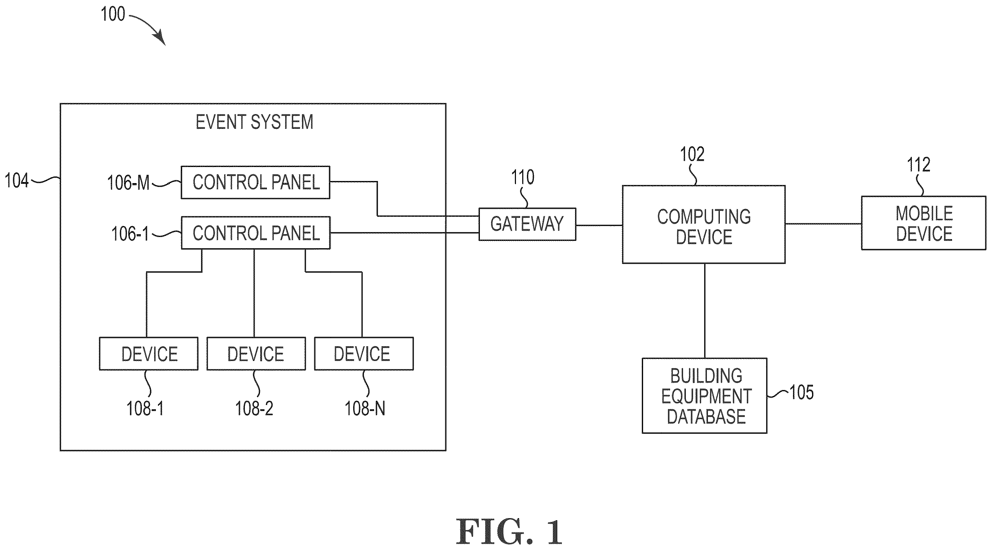

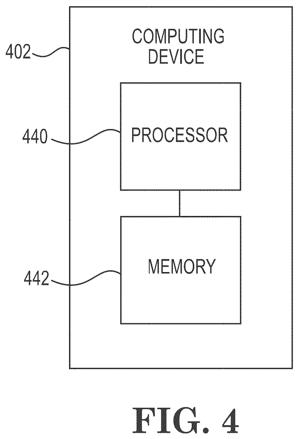

The figures herein follow a numbering convention in which the first digit or digits correspond to the drawing figure number and the remaining digits identify an element or component in the drawing. Similar elements or components between different figures may be identified by the use of similar digits. For example, 102 may reference element "02" in Figure 1, and a similar element may be referenced as 402 in Figure 4.

As used herein, "a", "an", or "a number of" something can refer to one or more such things, while "a plurality of" something can refer to more than one such things. For example, "a number of components" can refer to one or more components, while "a plurality of components" can refer to more than one component.

Figure 1 is an example of a system 100 for generating a safety score for a facility, in accordance with one or more embodiments of the disclosure. The system 100 can include a computing device 102, an event system 104, a building equipment database 105, a gateway 110, and a mobile device 114. The event system 104 can include a control panel 106-1 having associated devices 108-1, 108-2, 108-N (referred to collectively herein as devices 108), and a control panel 106-M.

As mentioned above, the system 100 can be included in a facility, a space in a facility, etc. The system 100 can include a device/series of devices in included in the event system 104 order to collect information about a facility and provide the collected information for analysis. Such an event system 104 can also take actions based on the collected information, such as providing an audible and/or visible warning in an emergency event.

For example, the system 100 can include devices 108. The devices 108 can include devices to detect an event and transmit the detected event for processing and/or analysis. As mentioned above, the devices 108 can be, for example, a camera, motion sensors, fire devices including fire sensors, smoke detectors, heat detectors, carbon monoxide (CO) detectors, or combinations of these; fire control panels; air quality sensors; interfaces; manual call points (MCPs); pull stations; input/output modules; aspirating units; fire doors; and/or audio/visual devices (e.g., speakers, sounders, flashers, buzzers, microphones, cameras, video displays, video screens, etc.), relay output modules, among other types of devices. Additionally, devices 108 may also include self-test capabilities.

The event system 104 can include a control panel 106-1 connected to the devices 108. The control panel 106-1 can be utilized to control the devices 108 included in the system 100.

The control panel 106-1 can be connected to the devices 108, transmit a plurality of commands to the devices 108, and/or provide power to the devices 108. The control panel 106-1 can apply a voltage to a device loop in order to power devices on the device loop. Such power can allow the devices 108 to perform actions, such as communication between devices 108 and the control panel 106-1, self-test procedures, and/or provide an audible and/or visible warning in an event, among other actions.

As additionally illustrated in Figure 1, the event system 104 can include a control panel 106-M. Although not illustrated in Figure 1, the control panel 106-M can include associated devices connected thereto. The control panel 106-M can perform similar functions with respect to its associated connected devices as the control panel 106-1 described above. Control panel 106-1 and 106-M are referred to collectively herein as control panels 106.

The control panels 106 may be further connected to the computing device 102 via a gateway 110. The gateway 110 can be a device (e.g., a building system gateway) that provides a communication link between the control panels 106 and other devices, such as the computing device 102. For example, the gateway 110 may enable transmission of data (e.g., system device data, activation signals, etc.) from the control panels 106 to the computing device 102 and vice versa. Communication between the control panels 106 and the computing device 102 is further described herein.

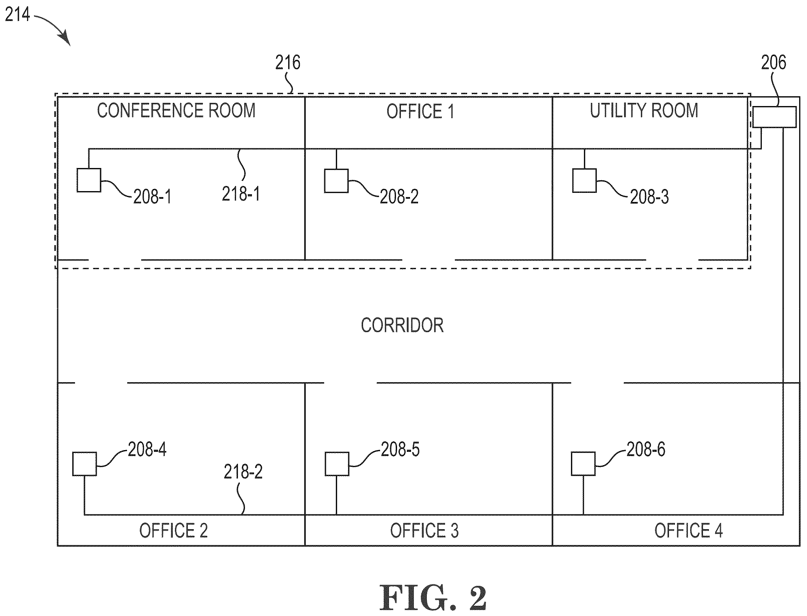

In some examples, the computing device 102 can be remote from the facility. For example, the computing device 102 can be a cloud computing platform that can generate a safety score for a facility. The computing device 102 can first receive building equipment inputs from the devices 108 connected to the control panel 106-1, from the control panel 106-1, (e.g., and the control panel 106-M and devices connected to control panel 106-M, not illustrated in Figure 1) of the event system 104 of the facility (e.g., via the gateway 110). Additionally, the computing device 102 can receive additional building equipment inputs from a building equipment database 105. The building equipment inputs and the additional building equipment inputs are further described in connection with Figure 2.

Utilizing the received inputs, the computing device 102 can determine a status of the devices 108 (e.g., and the non-illustrated devices described above). The computing device 102 can determine the status of the devices 108 by utilizing the received building equipment inputs and comparing those inputs to a benchmark/threshold. The computing device 102 can generate a safety score based on the determined status of the devices 108. The safety score can be transmitted to another computing device, such as mobile device 112. The safety score can be a safety score for the entire facility, for a particular zone or zones in the facility, for a particular control panel 106, for a particular wiring loop, and/or for a particular device. The above steps are further described in connection with Figure 2.

Figure 2 illustrates an example of a facility 214 having devices 208-1, 208-2, 208-3, 208-4, 208-5, 208-6 (referred to collectively herein as devices 208) and a control panel 206, in accordance with one or more embodiments of the disclosure. The facility 214 can include various areas including a corridor, a conference room, utility room, and offices 1-4. As illustrated in Figure 2, the facility 214 can include a zone 216 that includes the conference room, office 1, and utility room. The zone 216 can include devices 208-1, 208-2, 208-3, and such devices 208-1, 208-2, 208-3 can be connected to the control panel 206 via wiring loop 218-1. Additionally, office 2, office 3, and office 4 can include devices 208-4, 208-5, 208-6, respectively, and devices 208-4, 208-5, 208-6 can be connected to the control panel 206 via wiring loop 218-2.

As mentioned above, a computing device (e.g., not illustrated in Figure 2) can generate a safety score to quantify a safety level for a facility 214. Generation of the safety score is further described herein.

As previously described in connection with Figure 1, the facility 214 can include a control panel 206. The control panel 206 can be a control panel of an event system for the facility 214 and a number of devices 208 can be connected to the control panel. Although not illustrated in Figure 2, the control panel 206 can be connected to a computing device.

The computing device can receive, from the devices 208, building equipment inputs. As used herein, the building equipment inputs refer to data associated with a device state of a device. The device state of a device 208 refers to a current condition and/or configuration of a device. For example, the device state of a device can include an event log state of the device, a wiring loop state of the device, a power supply state of the device, a firmware state of the device, a configuration file state of the device, and/or a life of device state of the device, among other examples of device states.

As an example, the device 208-1 can be a fire device. In some examples, the device state can include an event log state of the fire device. The event log states can include whether a walk test with respect to the zone 216 has been performed, whether any test fires for testing the fire device have been initiated, whether any faults have occurred, if any faults, an amount of time the fault was active, whether any real alarms have occurred, whether any of the devices have had any false alarms, whether any zone-level of area-level faults have occurred, etc.

In some examples, device states can include a wiring loop state. The wiring loop state can include whether a wiring loop (e.g., wiring loop 218-1 and/or 218-2) includes a loop open and short, whether the loop includes a ground fault, whether the loop provides corrupt responses or bad polling data to the control panel 206, the loop wiring resistance, whether any notification appliance circuit (NAC) faults are present, and/or an NAC wiring resistance.

In some examples, the device states can include a power supply state. For example, the power supply state can include a battery wiring resistance, a battery charger voltage, an alternating current (AC) and battery downtime, a battery temperature, and/or a wireless battery backup time, etc.

In some examples, the device states can include a firmware state. The firmware state can include, for example, a firmware revision loop card, a firmware revision of the control panel 206, a firmware revision of any connected peripheral devices, and/or a firmware version history and any known issues with a current and/or previous firmware versions, etc.

In some examples, the device states can include a configuration file state. The configuration file state can include, for example, whether any regionally-based features are configured (e.g., a number of devices per zone, whether a control panel is present per zone, a type of tone used for alerting occupants of an emergency event, etc.), whether any active disablements are present as compared against configuration equations and logic equations, etc.

As previously mentioned in connection with Figure 1, the computing device can additionally receive additional building equipment inputs from a building equipment database. In some examples, the device states can include a life of device state of devices 208 (e.g., which can be determined from building equipment inputs and/or from the additional building equipment inputs from the building equipment database). For example, the life of device states of a device 208 may include a printed circuit board (PCB) revision state of the different PCBs included in a device (e.g., from the additional building equipment inputs), a device manufacturing date (e.g., from the additional building equipment inputs), a device manufacturing location (e.g., from the additional building equipment inputs), serial number data (e.g., from the additional building equipment inputs), drift data with respect to installation/run time from the devices 208 (e.g., from the building equipment inputs from the devices 208) that can indicate when a device 208 should be cleaned and/or replaced (e.g., based on dust accumulation, life run time, etc.).

Utilizing the device states from the devices 208, the computing device can determine a status of the number of devices 208. As used herein, the status of a device refers to an operational condition of a device. For example, the computing device can determine an operational condition of a device 208-1, the devices 208 collectively, etc. utilizing the building equipment inputs received from the devices 208.

Continuing with the fire device example above, the device 208-1 can be a fire device. To determine a status of the device 208-1, the computing device can compare the device state with a corresponding associated reference value. The reference value can be a value that is associated with a particular building equipment input. For example, the computing device can receive a device state including an event log state for the device 208-1 and a life of device state. The event log state for the device 208-1 indicates that a walk test for the device 208-1 has not been performed in the last 3 months for the device 208-1. Additionally, the life of device state for the device 208-1 indicates that the PCB revision for a PCB of the device 208-1 is revision 2.

The computing device can compare the device state, such as the event log state indicating a walk test has not been performed in the last 4 months for the device 208-1, with an associated walk test reference value (e.g., a walk test must be performed at least once every 3 months). Additionally, the computing device can compare the life of device state indicating a PCB revision is revision 2, with an associated PCB revision reference value (e.g., PCBs for a fire device such as the fire device 208-1 should be at least revision 3).

Based on the comparison of the device state with corresponding associated reference values, the computing device can determine the status of the device 208-1. The status of the devices 208 can include whether any of the devices 208 have a fault (e.g., including fault details such as type of fault, how long the fault has been active, a severity of the fault, etc.), whether a test of the devices 208 has been performed, whether a device of the devices 208 is missing, and/or whether any of the devices 208 have generated false alarms, etc.

For example, based on the comparison of the device state with corresponding associated reference values, the computing device can determine the status of the device 208-1. For instance, based on the comparison of the event log state indicating that a walk test has not been performed in the last 4 months with the walk test reference value (e.g., that a walk test must be performed at least once every 3 months), the computing device can determine the status of the device 208-1 with respect to walk tests, where the status of the device 208-1 is that a walk test has not been performed every 3 months.

Additionally, based on the comparison of the life of device state indicating a PCB revision is revision 2 for device 208-1 with an associated PCB revision reference value (e.g., PCBs for a fire device such as the fire device 208-1 should be at least revision 3), the computing device can determine the status of the device 208-1 with respect to PCB revision to be that the device 208-1 does not include the correct PCB revision.

Accordingly, as described above, the status of a device 208 can be a result of a comparison of an input value (e.g., a device state included in a building equipment input) against a threshold/reference value, where the threshold/reference value is a value associated with the particular category of input value (e.g., a PCB revision reference value for a PCB revision life of device state, drift data reference value for a life of device state, number of walk tests performed for an event log input, etc.).

Although the computing device is described above as determining two different statuses for a single device 208-1, embodiments are not so limited. For example, the computing device can determine a status for the device 208-1 from any of the received building equipment inputs from the device 208-1 (e.g., an event log state, a wiring loop state, a power supply state, a firmware state, a configuration file state, and/or a life of device state for the device 208-1). Additionally, the computing device can determine a status for any of the other devices 208 in the facility 214 from any received building equipment inputs from the other devices 208.

Utilizing the determined status, the computing device can generate a safety score. As mentioned above, the safety score can be a quantification of a safety level for the facility 214, as is further described herein.

The computing device can generate the safety score based on the determined status of the devices 208. For example, the computing device can generate the safety score by determining, using the status of the devices 208, a site impact value each device of the devices 208 has on the facility 214 based on a number of site impact safety factors. The site impact value can be a numerical value that describes the overall effect a particular device has on the facility 214 and can be defined according to site impact safety factors that each have a score associated therewith, as is further described herein. Site impact safety factors can include an area of the facility a device is monitoring, whether the device includes any cause-and-effect dependencies, whether the device is part of an event logic equation, and/or whether a fault of the device affects multiple areas of the facility.

Continuing with the fire device example above, the computing device can determine above that a walk test has not been performed at least once every 3 months for the device 208-1. The computing device can determine the site impact value of the walk test not having been performed at least once every 3 months as follows.

For example, the computing device can determine the effect of the walk test not having been performed at least once every 3 months on the facility 214. First, the computing device can determine that the device 208-1 was protecting one area of the facility 214, so the site impact safety factor score for the area of the facility the device is monitoring is -3 (e.g., as opposed to if the device 208-1 was protecting the entire facility 214, which can carry a score of -5). Second, the computing device can determine that the device 208-1 does not have any cause-and-effect dependencies, so the site impact safety factor score for the cause-and-effect dependencies site impact safety factor is 0. Third, the computing device can determine that the device 208-1 is not part of any event logic equations, and so the site impact safety factor score for the event logic equation site impact safety factor is 0. Lastly, the computing device can determine that the not having performed the walk test at least once every 3 months will affect multiple areas of the facility 214, and so the site impact safety factor score for whether the fault affects multiple areas of the facility 214 is -2.

Based on the above example, the computing device can generate the safety score. For example, the computing device can determine the safety score for the device 208-1 is -7. That is, the computing device can determine the safety score by a summation of the determined site impact safety factor scores for the device 208-1.

As described above, the computing device can generate a safety score for the device 208-1. However, embodiments are not so limited. For example, the computing device can generate a safety score for a zone 216 of the facility by generating a safety score for a sub-group of devices 208-1, 208-2, 208-3 that are in the zone 216 of the total number of devices 208 in the facility, generate a safety score for a particular panel in the facility by generating a safety score for the devices 208 connected to the panel (e.g., devices 208 connected to panel 206), generate a safety score for a particular wiring loop 218-1 and/or 218-2 by generating a safety score for a sub-group of devices (e.g., devices 208-4, 208-5, 208-6) that are connected to a particular wiring loop (e.g., wiring loop 218-2), and/or generating a safety score for the entire facility 214 by generating a safety score for all of the devices 208 in the facility.

As the facility 214 operates over time, devices 208 can be maintained, updated, added, removed, develop faults, etc. Accordingly, the computing device can perform the method described above at a particular frequency. For example, the computing device can generate a safety score every week, month, six months, year, etc. Repeating the above method at a particular frequency can ensure that a dynamic safety score can be generated, which can help ensure users (e.g., building managers/owners) stay up to date on the state of the safety of the facility.

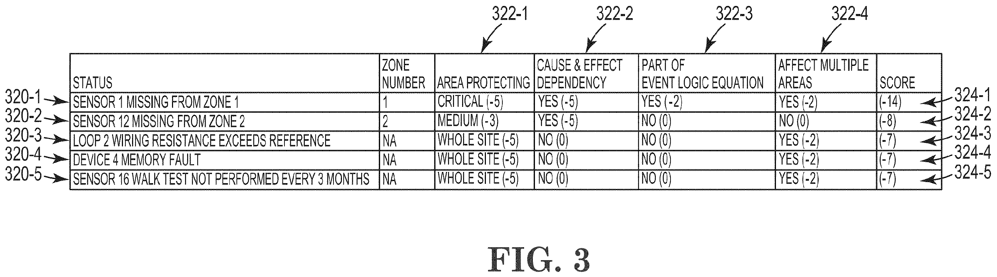

Figure 3 illustrates an example of generating a safety score, in accordance with one or more embodiments of the disclosure. As illustrated in Figure 3, the computing device can generate safety scores 324 for a number of devices in the facility, as is further described herein.

As previously described above, the computing device can receive building equipment inputs from a number of devices of an event system in a facility. The building equipment inputs can include a device state of each of the number of devices, including event log states of the devices, wiring loop states of the devices, power supply states of the devices, firmware states of the devices, configuration file states of the device, and/or life of device states of the devices, among other examples of device states.

The computing device can determine a status 320 of the number of devices for the device state of each of the number of devices included in the received building equipment inputs. For example, as previously described in connection with Figure 2, the computing device can compare each device state with a corresponding associated reference value. The reference value can be a value that is associated with a particular building equipment input.

As an example, the computing device can determine that the status 320-1 of Sensor 1 is that Sensor 1 is missing from Zone 1 by determining, based on the computing device checking a zone number and output device dependency for Sensor 1 by parsing configuration file and event rules, that Sensor 1 is missing from zone 1. As another example, the computing device can compare, based on a corrupt response received by the control panel in response to the control panel polling the memory of Device 4, the corrupt response with a reference response value and determine that the status 320-4 of Device 4 is that it includes a Memory Fault. As a further example, the computing device can compare, based a wiring resistance of Loop 2 received by the control panel, the received wiring resistance of Loop 2 with a reference resistance value (e.g., suggested manufacturer value) and determine that the status 320-3 of Loop 2 is that it exceeds the reference resistance value.

The computing device can then generate a safety score based on the determined status of the devices by determining a site impact value each device has on the facility using a number of site impact safety factors 322. For example, based on the determined status 320-1 (e.g., the Sensor 1 is missing from Zone 1), the computing device can determine a site impact value the Sensor 1 missing from Zone 1 has using the site impact safety factors 322-1, 322-2, 322-3, and 322-4. For instance, the computing device can parse configuration files and event rules associated with the Sensor 1 (included in the building equipment inputs and/or the additional building equipment inputs from he building equipment database), and check whether any other sensors are placed in Zone 1. Since Zone 1 is critical, the computing device can determine the site impact safety factor 322-1 has a value of - 5. Additionally, based on no other sensor being present in Zone 1, the computing device can determine that Sounders 1 and 2 (located in Zone 1) won't get activated as no sensors are present. Accordingly, the computing device can determine the site impact safety factor 322-2 to have a score of -5, as the Sensor 1 being missing from Zone 1 has cause-and-effect dependencies. Further, the computing device can determine the site impact safety factor 322-3 and site impact safety factor 322-4 to have scores of -2 and -2, respectively, as the Sensor 1 is part of event logic equations and affects multiple areas. Accordingly, the computing device can generate a safety score 324-1 of -14 by summing the values of the site impact safety factors 322.

As illustrated in Figure 3, the computing device can generate safety scores 324-2 for the Sensor 12 missing from Zone 2 to be -8, 324-3 for the Loop 2 Wiring Resistance Exceeding a Reference to be -7, 324-4 for the Device 4 having a Memory Fault, and 324-5 for Sensor 16 to be -7 based on Sensor 16 not having the walk test performed at least once every 3 months. Accordingly, the safety scores can be tabulated for the facility as a whole (e.g., -43), for a zone in the facility, for a panel in the facility, for a wiring loop in the facility, etc., as previously described in connection with Figure 2.

Once the computing device has generated a safety score, a user can review the safety score and be informed about the dynamic level of safety of the facility. However, the user may also be interested in improving the safety score of the facility. Accordingly, the computing device can generate an instruction for improving the safety score. For example, the instruction can include steps to improve a site impact value a device has on the facility.

For example, the largest impact to facility's safety score is safety score 324-1 where the Sensor 1 is missing from Zone 1. In order to improve the safety score 324-1, the computing device can generate an instruction (e.g., textual, visual, and/or audible) indicating to a user that a sensor should be located/installed in Zone 1. For example, the instruction can include steps (e.g., textual, audible, in video form, etc.) to a user that detail a type of sensor, the location of where to install the sensor, and/or other information to remedy the Sensor 1 being Missing from Zone 1 safety score 324-1. Upon installation of a Sensor 1 in Zone 1, when the computing device generates an updated safety score, the safety score of the facility can be reduced as the Sensor 1 has been installed in Zone 1, increasing the safety of the facility.

In some examples the computing device can automatically cause a device having a fault to remedy the fault to improve the safety score. For example, the Device 4 has a memory fault with a corresponding safety score 324-4 of -7. The computing device can transmit commands to the Device 4 to cause the Device 4 to remotely remedy the memory fault (e.g., by rebooting, reconfiguring a configuration file, etc.).

Although the statuses 320 are described in Figure 3 as including a Sensor missing from a zone, a wiring resistance exceeding a reference, a memory fault, and/or a walk test not being performed at least once every 3 months, embodiments are not so limited. For example, other statuses for devices in the facility can include a frequency of walk tests performed (e.g., determined by start/stop event times with timestamps from the event log of the tested device), an amount of fault time a device accrues (e.g., determined by a time stamp in the event log of when the fault begins, how long the fault is active based on a time stamp in the event log of when the fault is remedied, etc.), trouble conditions and disablement zones/devices that derive which cause-and-effect rules and/or event logic won't work, recurrent false alarms, whether a device manufacturing time stamp indicates the device is out of warrant, firmware revisions and any known issues associated with those revisions, wireless device battery life for replacement prediction, secondary battery resistance value log to predict battery backup support time in case of AC mains failure, loop related diagnostic data to determine how to clean loop wiring/frequency of corrupt response to polling, amount of fire drill operations performed, sounder tone and volume (e.g., determined from configuration file and compared with regulatory rules), battery health based on charging/discharging time, and/or drift compensation data, among other statuses for other devices/device types in the facility.

Accordingly, generating a safety score for a facility, according to the disclosure, can allow for a safety score to quantify a safety level for a facility. The dynamic safety score can allow a user to gauge a level of safety for the facility, see where a score is negatively affected, and remedy the negative impacts to improve the safety in the facility more easily and efficiently as compared with previous approaches.

Figure 4 is an example of a computing device for generating a safety score for a facility, in accordance with one or more embodiments of the disclosure. As illustrated in Figure 4, the computing device 402 can include a memory 442 and a processor 440 for generating a safety score for a facility, in accordance with the present disclosure.

The memory 442 can be any type of storage medium that can be accessed by the processor 440 to perform various examples of the present disclosure. For example, the memory 442 can be a non-transitory computer readable medium having computer readable instructions (e.g., executable instructions/computer program instructions) stored thereon that are executable by the processor 440 for generating a safety score for a facility in accordance with the present disclosure.

The memory 442 can be volatile or nonvolatile memory. The memory 442 can also be removable (e.g., portable) memory, or non-removable (e.g., internal) memory. For example, the memory 442 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 442 is illustrated as being located within computing device 402, embodiments of the present disclosure are not so limited. For example, memory 442 can also be located internal to another computing resource (e.g., enabling computer readable instructions to be downloaded over the Internet or another wired or wireless connection).

The processor 440 may be a central processing unit (CPU), a semiconductor-based microprocessor, and/or other hardware devices suitable for retrieval and execution of machine-readable instructions stored in the memory 442.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A computing device (102, 402), comprising:
a memory (442); and
a processor (440) configured to execute executable instructions stored in the memory to:
receive building equipment inputs from a number of devices (108) of an event system (104) in a facility (214);
determine a status (320) of the number of devices based on the received building equipment inputs; and
generate a safety score (324) based on the determined status of the number of devices.

2. The computing device (102, 402) of claim 1, wherein the processor is configured to generate the safety score by determining, using the status of the number of devices, a site impact value each device of the number of devices has on the facility based on a number of site impact safety factors (322).

3. The computing device (102, 402) of claim 2, wherein each of the number of site impact safety factors has a score associated therewith.

4. The computing device (102, 402) of claim 2, wherein the number of site impact safety factors include at least one of:
an area of the facility a device of the number of devices is monitoring;
whether the device includes a cause-and-effect dependency;
whether the device is part of an event logic equation; and
whether a fault of the device affects multiple areas of the facility.

5. The computing device (102, 402) of claim 1, wherein the building equipment inputs include a device state of each of the number of devices.

6. The computing device (102, 402) of claim 5, wherein the device state of a device of the number of devices includes at least one of:
an event log state;
a wiring loop state;
a power supply state;
a firmware state;
a configuration file state; and
a life of device state.

7. The computing device (102, 402) of any one of claims 1-6, wherein the processor is configured to generate the safety score for the facility.

8. The computing device (102, 402) of any one of claims 1-6, wherein the processor is configured to generate the safety score for a zone (216) of a number of zones (216) in the facility.

9. The computing device (102, 402) of any one of claims 1-6, wherein the processor is configured to generate the safety score for a panel (106, 206) in the facility.

10. The computing device (102, 402) of any one of claims 1-6, wherein the processor is configured to generate the safety score for a particular wiring loop (218) in the facility.

11. A system for generating a safety score for a facility, comprising:
a control panel (106, 206) of an event system (104) in the facility;
a number of devices (108) connected to the control panel; and
a computing device (102, 402) configured to:
receive, from the number of devices via the control panel, building equipment inputs, wherein the building equipment inputs include a device state of each of the number of devices;
determine a status (320) of the number of devices based on the device state of each of the number of devices included in the received building equipment inputs; and
generate a safety score (324) based on the determined status of the number of devices.

12. The system of claim 11, wherein the computing device (102, 402) is configured to:
compare the device state of each of the number of devices with a corresponding associated reference value; and
determine the status of each of the number of devices based on each comparison.

13. The system of claim 11, wherein the status of the number of devices includes at least one of:
whether the number of devices have a fault;
whether a test of the number of devices has been performed;
whether a device of the number of devices is missing; and
whether the number of devices have had a false alarm.

14. The system of any one of claims 11-13, wherein the computing device (102, 402) is further configured to receive additional building equipment inputs from a building equipment database (105).

15. The system of any one of claims 11-13, wherein the computing device (102, 402) is configured to generate, based on the safety score, an instruction for improving the safety score.
